# EUROPEAN PATENT APPLICATION

(11) **EP 4 507 269 A1**
(43) Date of publication of application: **12.02.2025**
(21) Application number: 23795488.8
(22) Date of filing: 26.04.2023
(51) Int. Cl.: H04L 45/50

(54) **METHOD, APPARATUS AND SYSTEM FOR PROCESSING MESSAGE**

(30) Priority: 29.04.2022 CN 202210475581; 02.06.2022 CN 202210620663
(71) Applicant: Huawei Technologies Co., Ltd., Shenzhen, Guangdong 518129 (CN)
(72) Inventor: LI, Zhenbin, Shenzhen, Guangdong 518129 (CN); CHEN, Shuanglong, Shenzhen, Guangdong 518129 (CN); DONG, Jie, Shenzhen, Guangdong 518129 (CN)
(74) Representative: Goddar, Heinz J.
(86) International application number: PCT/CN2023/090925
(87) International publication number: WO 2023/208056

(57) **Abstract**

Embodiments of this application provide a packet processing method, apparatus, and system. The method includes: A first network device receives a first packet, determines a second packet based on the first packet and a first segment identifier SID, and forwards the second packet based on a label forwarding path. The second packet is an IPv6 packet, and includes a data packet and the first SID. The first SID includes a first prefix and at least one MPLS label. The first prefix indicates that the first SID carries the at least one MPLS label, and the at least one MPLS label indicates to use a label forwarding path determined by using the at least one MPLS label to implement IPv6 forwarding. According to the technical solution provided in this application, MPLS forwarding can be implemented on an IPv6 path.

## Description

This application claims priorities to Chinese Patent Application No. 202210475581.9, filed with the China National Intellectual Property Administration on April 29, 2022 and entitled "IPV6-BASED MPLS IMPLEMENTATION METHOD, DEVICE, AND SYSTEM", and to Chinese Patent Application No. 202210620663.8, filed with the China National Intellectual Property Administration on June 2, 2022 and entitled "PACKET PROCESSING METHOD, APPARATUS, AND SYSTEM", both of which are incorporated herein by reference in their entireties.

### TECHNICAL FIELD

Embodiments of this application relate to the field of network communication, and more specifically, to a packet processing method, apparatus, and system.

### BACKGROUND

The internet protocol version 6 (internet protocol version 6, IPv6) is a next-generation IP protocol designed by the internet engineering task force (internet engineering task force, IETF). The use of IPv6 can not only resolve a problem of a quantity of network address resources, but also resolve obstacles of connecting a plurality of access devices to the internet.

In a scenario in which an IPv6 forwarding path includes a path (for example, a tunnel) that needs to be forwarded by using a label, how to process and forward a packet becomes an urgent problem to be resolved currently.

### SUMMARY

Embodiments of this application provide a packet processing method, apparatus, and system, so that MPLS forwarding can be implemented on an IPv6 path. In addition, a specific MPLS forwarding path may be further determined when IPv6 forwarding is performed.

According to a first aspect, a packet processing method is provided. The method includes: A first network device receives a first packet, determines a second packet based on the first packet and a first segment identifier SID, and forwards the second packet based on a label forwarding path. The second packet is an IPv6 packet, and includes a data packet and a first SID. The first SID includes a first prefix and at least one MPLS label. The first prefix indicates that the first SID carries the at least one MPLS label, and the at least one MPLS label indicates to use a label forwarding path determined by using the at least one MPLS label to implement IPv6 forwarding.

In the foregoing technical solution, the first network device may use the label forwarding path determined by using the at least one MPLS label to implement IPv6 forwarding. In this way, MPLS forwarding is implemented on the IPv6 path. This further saves packet processing time and improves a packet forwarding speed while IPv6-based forwarding is performed. In addition, a specific forwarding path in a tunnel may be further specified when IPv6 forwarding is performed.

With reference to the first aspect, in some implementations of the first aspect, the first packet is the data packet, and the first network device performs IPv6 encapsulation on the first packet based on the first SID, to obtain the second packet.

With reference to the first aspect, in some implementations of the first aspect, the second packet includes an IPv6 basic header, the IPv6 basic header includes a destination address DA field, and the DA field is used to carry the first SID.

With reference to the first aspect, in some implementations of the first aspect, the second packet includes an IPv6 extension header, and the IPv6 extension header includes the first SID.

With reference to the first aspect, in some implementations of the first aspect, the IPv6 extension header further includes a second SID, and the second SID includes the first prefix and at least one MPLS label, or the second SID includes at least one MPLS label.

With reference to the first aspect, in some implementations of the first aspect, the first SID includes a locator (locator) and a function (function), the locator is used to carry the first prefix, and the function is used to carry the at least one MPLS label.

With reference to the first aspect, in some implementations of the first aspect, the first network device forwards the second packet based on a first MPLS label and a corresponding MPLS forwarding entry, where the first MPLS label is a 1^{st} MPLS label encapsulated after the first prefix in the first SID.

With reference to the first aspect, in some implementations of the first aspect, the MPLS forwarding entry indicates to insert a second MPLS label into the second packet, and the first network device performs IPv6 encapsulation on the second packet to generate a third packet, where the third packet is an IPv6 packet, and the third packet includes the second MPLS label. The first network device sends the third packet through an outbound interface corresponding to the second MPLS label in the MPLS forwarding entry.

With reference to the first aspect, in some implementations of the first aspect, the MPLS forwarding entry indicates to insert a second MPLS label into the second packet, and the first network device encapsulates the second MPLS label before the first MPLS label in the second packet to generate a third packet. The first network device sends the third packet through an outbound interface corresponding to the second MPLS label in the MPLS forwarding entry.

With reference to the first aspect, in some implementations of the first aspect, the at least one MPLS label is a short label.

With reference to the first aspect, in some implementations of the first aspect, the first network device is an ingress device or an intermediate forwarding device of the label forwarding path.

According to a second aspect, a packet processing apparatus is provided, and is disposed in a first network device. The apparatus includes a receiving module, a processing module, and a sending module. The receiving module is configured to receive a first packet, where the first packet includes a data packet. The processing module is configured to determine a second packet based on the first packet and a first segment identifier SID, where the second packet is an internet protocol version 6 IPv6 packet, the second packet includes the data packet and the first SID, the first SID includes a first prefix and at least one multiprotocol label switching MPLS label, the first prefix indicates that the first SID carries the at least one MPLS label, and the at least one MPLS label indicates to use a label forwarding path determined by using the at least one MPLS label to implement IPv6 forwarding. The sending module is configured to forward the second packet based on the label forwarding path.

With reference to the second aspect, in some implementations of the second aspect, the first packet is the data packet, and the processing module is specifically configured to perform IPv6 encapsulation on the first packet based on the first SID, to obtain the second packet.

With reference to the second aspect, in some implementations of the second aspect, the second packet includes an IPv6 basic header, the IPv6 basic header includes a destination address DA field, and the DA field is used to carry the first SID.

With reference to the second aspect, in some implementations of the second aspect, the second packet includes an IPv6 extension header, and the IPv6 extension header includes the first SID.

With reference to the second aspect, in some implementations of the second aspect, the IPv6 extension header further includes a second SID, and the second SID includes the first prefix and at least one MPLS label, or the second SID includes at least one MPLS label.

With reference to the second aspect, in some implementations of the second aspect, the first SID includes a locator (locator) and a function (function), the locator is used to carry the first prefix, and the function is used to carry the at least one MPLS label.

With reference to the second aspect, in some implementations of the second aspect, the sending module is specifically configured to forward the second packet based on a first MPLS label and a corresponding MPLS forwarding entry, where the first MPLS label is a 1^{st} MPLS label encapsulated after the first prefix in the first SID.

With reference to the second aspect, in some implementations of the second aspect, the MPLS forwarding entry indicates to insert a second MPLS label into the second packet. The sending module is specifically configured to: perform IPv6 encapsulation on the second packet to generate a third packet, where the third packet is an IPv6 packet, and the third packet includes the second MPLS label; and send the third packet through an outbound interface corresponding to the second MPLS label in the MPLS forwarding entry.

With reference to the second aspect, in some implementations of the second aspect, the MPLS forwarding entry indicates to insert a second MPLS label into the second packet. The sending module is specifically configured to: encapsulate the second MPLS label before the first MPLS label in the second packet to generate a third packet; and send the third packet through an outbound interface corresponding to the second MPLS label in the MPLS forwarding entry.

With reference to the second aspect, in some implementations of the second aspect, the at least one MPLS label is a short label.

With reference to the second aspect, in some implementations of the second aspect, the apparatus is an ingress device or an intermediate forwarding device of the label forwarding path.

Beneficial effects of the second aspect and any possible implementation of the second aspect correspond to beneficial effects of the first aspect and any possible implementation of the first aspect. Details are not described herein again.

According to a third aspect, a first network device is provided. The first network device has a function of implementing the foregoing packet processing apparatus. The function may be implemented based on hardware, or may be implemented based on hardware executing corresponding software. The hardware or the software includes one or more modules corresponding to the foregoing function.

In a possible design, a structure of the first network device includes a processor, and the processor is configured to support the first network device in executing a corresponding function in the foregoing method.

The first network device may include a memory. The memory is configured to be coupled to the processor, and the memory stores program instructions and data that are necessary for the first network device.

In another possible design, the first network device includes a processor, a transmitter, a receiver, a random access memory, a read-only memory, and a bus. The processor is separately coupled to the transmitter, the receiver, the random access memory, and the read-only memory through the bus. When the first network device needs to be run, a basic input/output system built into the read-only memory or a boot loader in an embedded system is used to boot a system to start, to boot the first network device to enter a normal running state. After entering the normal running state, the first network device runs an application program and an operating system in the random access memory, so that the processor performs the method according to the first aspect or any possible implementation of the first aspect.

According to a fourth aspect, a first network device is provided. The first network device includes a main control board and an interface board, and may further include a switching board. The first network device is configured to perform the packet processing method according to the first aspect or any possible implementation of the first aspect.

It should be noted that there may be one or more main control boards. When there are a plurality of main control boards, the main control boards may include a primary main control board and a secondary main control board. There may be one or more interface boards. A stronger data processing capability of the first network device indicates more provided interface boards. There may also be one or more physical interface cards on the interface board. There may be no switching board or one or more switching boards. When there are a plurality of switching boards, load balancing and redundancy backup may be implemented together. In a centralized forwarding architecture, the first network device may not need a switching board, and the interface board undertakes a service data processing function of an entire system. In a distributed forwarding architecture, the first network device may have at least one switching board, to implement data exchange between a plurality of interface boards by using the switching board, and provide a large-capacity data exchange and processing capability. Therefore, a data access and processing capability of the first network device in the distributed architecture is higher than that of a device in the centralized architecture. A specific architecture that is to be used depends on a specific networking deployment scenario. This is not limited herein.

According to a fifth aspect, a first network device is provided. The first network device includes a control module and a first forwarding sub-device. The first forwarding sub-device includes an interface board, and may further include a switching board. The first forwarding sub-device is configured to perform a function of the interface board in the fourth aspect, and may further perform a function of the switching board in the fourth aspect. The control module includes a receiver, a processor, a transmitter, a random access memory, a read-only memory, and a bus. The processor is separately coupled to the receiver, the transmitter, the random access memory, and the read-only memory through the bus. When the control module needs to be run, a basic input/output system built into the read-only memory or a boot loader in an embedded system is used to boot a system to start, to boot the control module to enter a normal running state. After entering the normal running state, the control module runs an application program and an operating system in the random access memory, so that the processor performs a function of the main control board in the fourth aspect.

It may be understood that, in actual application, the first network device may include any quantity of interfaces, processors, or memories.

According to a sixth aspect, a computer program product is provided. The computer program product includes computer program code, and when the computer program code is run on a computer, the computer is enabled to perform the method according to the first aspect or any possible implementation of the first aspect.

According to a seventh aspect, a computer-readable medium is provided. The computer-readable medium stores program code, and when the computer program code is run on a computer, the computer is enabled to perform the method according to the first aspect or any possible implementation of the first aspect. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

According to an eighth aspect, a chip is provided. The chip includes a processor and a data interface, and the processor reads, through the data interface, instructions stored in a memory, to perform the method according to the first aspect or any possible implementation of the first aspect. In a specific implementation process, the chip may be implemented in a form of a central processing unit (central processing unit, CPU), a micro controller unit (micro controller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

According to a ninth aspect, a packet processing system is provided. The system includes the packet processing apparatus according to the second aspect or any possible implementation of the second aspect.

### BRIEF DESCRIPTION OF DRAWINGS

FIG. 1 is a schematic flowchart of a packet processing method according to an embodiment of this application;
FIG. 2 is a diagram of a structure of a first SID according to an embodiment of this application;
FIG. 3 is a diagram of a structure of an MPLS label;
FIG. 4 is a diagram of a structure of another MPLS label;
FIG. 5 is a diagram of a structure of another MPLS label;
FIG. 6 is a diagram of an IPv6 MPLS scenario applied to an embodiment of this application;
FIG. 7 is a schematic flowchart of another packet processing method according to an embodiment of this application;
FIG. 8 is a diagram of a format of a packet 1 according to an embodiment of this application;
FIG. 9 is a diagram of another format of a packet 1 according to an embodiment of this application;
FIG. 10 is a diagram of a format of a packet 2 according to an embodiment of this application;
FIG. 11 is a diagram of a format of a packet 3 according to an embodiment of this application;
FIG. 12 is a diagram of another cross-domain scenario applied to an embodiment of this application;
FIG. 13 is a schematic flowchart of another packet processing method according to an embodiment of this application;
FIG. 14 is a diagram of a format of a packet 4 according to an embodiment of this application;
FIG. 15 is a diagram of another format of a packet 4 according to an embodiment of this application;
FIG. 16 is a diagram of a format of a packet 5 according to an embodiment of this application;
FIG. 17 is a diagram of another format of a packet 5 according to an embodiment of this application;
FIG. 18 is a diagram of a format of a packet 6 according to an embodiment of this application;
FIG. 19 is a diagram of another format of a packet 7 according to an embodiment of this application;
FIG. 20 is a diagram of a format of a packet 8 according to an embodiment of this application;
FIG. 21 is a diagram of another format of a packet 9 according to an embodiment of this application;
FIG. 22 is a diagram of a structure of a packet processing apparatus 2200 according to an embodiment of this application;
FIG. 23 is a diagram of a hardware structure of a first network device 2000 according to an embodiment of this application; and
FIG. 24 is a diagram of a hardware structure of another first network device 2100 according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in one embodiment", "in some embodiments", "in some other embodiments", and "in still some other embodiments" that appear in this specification and differ from each other do not necessarily refer to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof refers to any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

The internet protocol version 6 (internet protocol version 6, IPv6) is a next-generation IP protocol designed by the internet engineering task force (internet engineering task force, IETF). The IPv6 can be used to not only resolve a problem about a quantity of network address resources, but also resolve obstacles when a plurality of access devices are connected to the internet.

Multi-protocol label switching (multi-protocol label switching, MPLS) is a technology in which a label is used to guide high-speed and efficient data transmission on an open communication network. Compared with that in a conventional internet protocol (internet protocol, IP) routing manner, in a manner in which data is forwarded through MPLS, an IP packet header only needs to be analyzed at a network edge, and an IP packet header does not need to be analyzed at each hop. In this way, packet processing time is saved, and forwarding efficiency is improved.

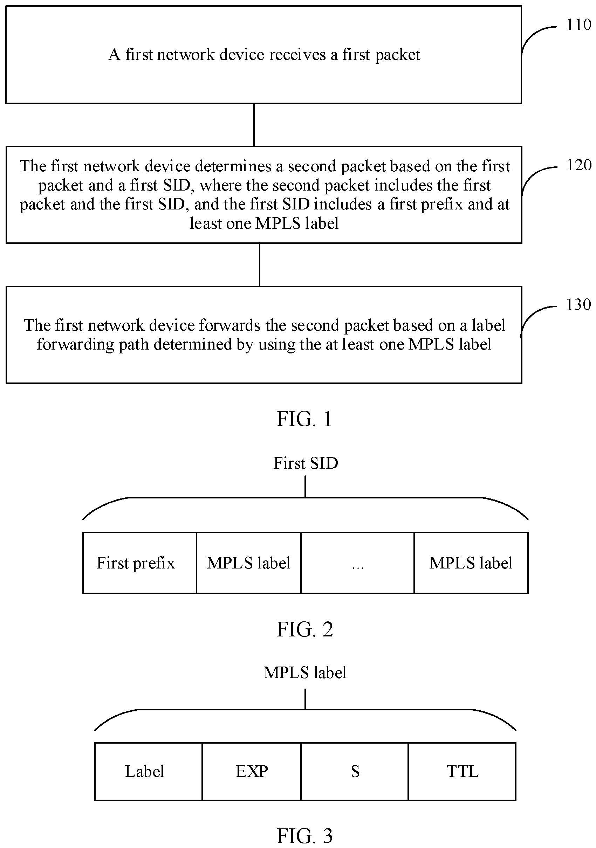

Embodiments of this application provide a packet processing method, so that MPLS forwarding can be implemented on an IPv6 path. In addition, a specific MPLS forwarding path may be further determined when IPv6 forwarding is performed. With reference to FIG. 1, the following describes in detail a packet processing method according to an embodiment of this application.

FIG. 1 is a schematic flowchart of a packet processing method according to an embodiment of this application. As shown in FIG. 1, the method may include steps 110 to 130. The following separately describes steps 110 to 130 in detail.

Step 110: A first network device receives a first packet.

The first packet received by the first network device may include a data packet, and there are a plurality of specific packet formats. This is not specifically limited in this application. In a possible implementation, the first packet is the data packet. In another possible implementation, the first packet is an IPv6 packet, and the IPv6 packet includes an inner data packet.

Step 120: The first network device determines a second packet based on the first packet and a first SID, where the second packet includes the first packet and the first SID, and the first SID includes a first prefix and at least one MPLS label.

The first network device may determine the second packet based on the first packet and the first segment identifier (segment identifier, SID). The second packet is an IPv6 packet, and may include the first packet and the first SID.

As shown in FIG. 2, the first SID may include the first prefix and the at least one MPLS label. The first prefix indicates that the first SID carries the at least one MPLS label, and the at least one MPLS label indicates to use a label forwarding path determined by using the at least one MPLS label to implement IPv6 forwarding. In other words, the at least one MPLS label included in the first SID indicates the label forwarding path during implementation of IPv6 forwarding.

It should be understood that segment routing IPv6 (segment routing IPv6, SRv6) is a method designed based on a source routing concept to forward an IPv6 data packet on a network. Segment routing (segment routing, SR) based on an IPv6 forwarding plane indicates operation instructions on the network in a packet by using a segment identifier (segment identifier, SID). For example, a segment routing header SRH (Segment Routing Header) is inserted into an IPv6 packet, and an explicit segment identifier (SID) stack is pushed into the SRH, so that an IPv6 address is used as a SID and programming is performed in the SID. That is, a 128-bit SID is divided into three parts: a locator (Locator), a function (Function), and an argument (Argument). The locator is used for routing and addressing, the function indicates a corresponding operation instruction, and the argument is used to carry a parameter required for executing the instruction.

For example, in embodiments of this application, the first SID may include a locator (Locator) and a function (Function). The locator part may be used to carry the first prefix, and the function part may be used to carry the at least one MPLS label.

It should be noted that, in embodiments of this application, the locator part used to carry the first prefix may indicate all devices on the label forwarding path determined by using the at least one MPLS label.

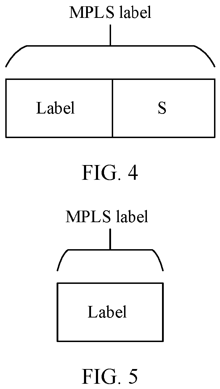

There are a plurality of structures of the MPLS label. This is not specifically limited in embodiments of this application. As an example, FIG. 3 to FIG. 5 list several possible label formats of the MPLS label. For example, as shown in FIG. 3, the MPLS label may also be referred to as a long label, and includes a label (label) field, an expand (expand, EXP) field, an S field, a time to live (time to live, TTL) field, and the like. The label field indicates a label value; the EXP field is used for extension and is usually used as a class of service (class of service, SoC); the S field is used to identify whether the label is a bottom-layer label; and the TTL field is used to prevent a loop. For another example, as shown in FIG. 4, the MPLS label may also be referred to as a short label, and includes a label (label) field and an S field. For another example, as shown in FIG. 5, the MPLS label may also be referred to as another short label, and includes a label (label) field.

There are a plurality of formats of the second packet. This is not specifically limited in embodiments of this application. In a possible implementation, the second packet includes an IPv6 basic header and the first packet. The IPv6 basic header includes a destination address (destination address, DA) field, and the DA field is used to carry the first SID. In another possible implementation, the second packet includes an IPv6 basic header, an IPv6 extension header, and the first packet. A DA field in the IPv6 basic header carries the first SID, and the IPv6 extension header may further include one or more SIDs. The following describes in detail a specific format of the second packet with reference to a specific embodiment. Details are not described herein.

It should be understood that the one or more SIDs in the IPv6 extension header may include only at least one MPLS label, or may further include the first prefix and at least one MPLS label. This is not specifically limited in this application.

It should be further understood that the IPv6 extension header may be a segment routing header (segment routing header, SRH), or may be another extension header. This is not specifically limited in embodiments of this application.

There are a plurality of implementations in which the first network device determines the second packet based on the first packet and the first SID. This is not specifically limited in embodiments of this application. The following provides several possible implementations as examples. In a possible implementation, the first packet received by the first network device is a data packet. The first network device encapsulates an IPv6 packet header before the first packet, and the IPv6 packet header includes the first SID. In another possible implementation, the first packet received by the first network device is an IPv6 packet. The IPv6 packet includes an IPv6 basic header and an IPv6 extension header (including the first SID), and the first network device uses the first SID in the IPv6 extension header as a DA in the IPv6 basic header. The following provides detailed descriptions with reference to specific embodiments. Details are not described herein.

Step 130: The first network device forwards the second packet based on the label forwarding path determined by using the at least one MPLS label.

In the foregoing technical solution, the first network device may use the label forwarding path determined by using the at least one MPLS label to implement IPv6 forwarding. In this way, MPLS forwarding is implemented on the IPv6 path. This further saves packet processing time and improves a packet forwarding speed while IPv6-based forwarding is performed. In addition, a specific MPLS forwarding path may be further determined when IPv6 forwarding is performed.

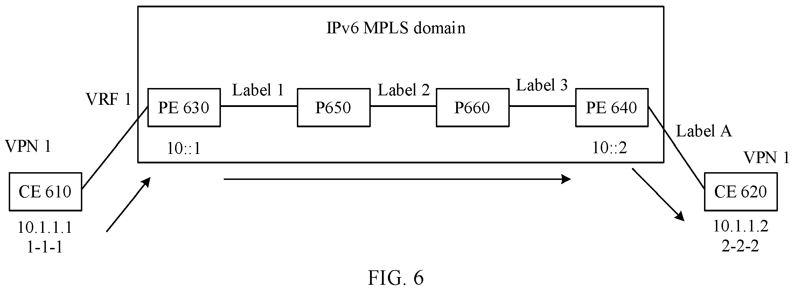

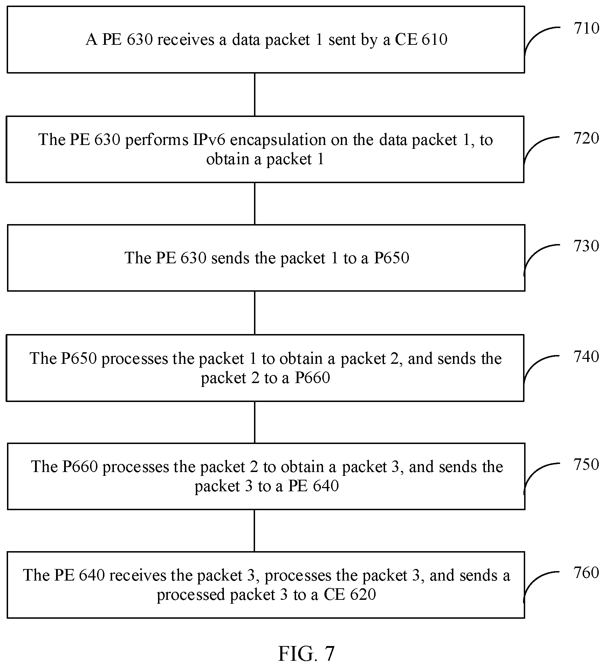

The following uses a scenario shown in FIG. 6 as an example to describe, with reference to FIG. 7, a specific implementation of the packet processing method provided in embodiments of this application. It should be understood that examples in FIG. 6 and FIG. 7 are merely intended to help a person skilled in the art understand embodiments of this application, but are not intended to limit embodiments of this application to specific values or specific scenarios in FIG. 6 and FIG. 7. It is clear that a person skilled in the art can make various equivalent modifications or changes based on the provided examples, and such modifications and changes also fall within the scope of embodiments of this application.

FIG. 6 is a diagram of an IPv6 MPLS scenario applied to an embodiment of this application. As shown in FIG. 6, the scenario may include a customer edge (customer edge, CE) 610 device, a CE 620 device, a provider edge (provider edge, PE) 630 device, a PE 640 device, one or more provider (provider, P) devices, and the like.

The CE 610 device and the CE 620 device are edge devices of a virtual private network (virtual private network, VPN) 1, the PE 630 device and the PE 640 device are edge devices of a tunnel based on label forwarding, and the one or more P devices are intermediate forwarding devices of the tunnel based on label forwarding. For ease of description, two P devices (a P650 device and a P660 device) are used as examples for description in FIG. 6.

It should be understood that a tunnel including the PE 630, the PE 640, the P650, and the P660 may also be referred to as an IPv6 MPLS domain, that is, a device (which may also be referred to as a label switching router (label switching router, LSR)) in the IPv6 MPLS domain may implement IPv6 forwarding based on a label forwarding path determined by using an MPLS label. The PE 630 is an ingress (ingress) LSR of the tunnel, and is responsible for adding an MPLS label to a packet that enters the IPv6 MPLS domain. The P650 and the P660 are intermediate forwarding LSRs in the IPv6 MPLS domain, and are responsible for transmitting, based on the MPLS label, the packet to an egress LSR along a label switched path (label switched path, LSP) that includes a series of LSRs. The PE 640 is the egress (egress) LSR of the tunnel, and is responsible for removing the label from the packet and forwarding the packet to a destination device.

It should be further understood that the LSP is a tunnel from an ingress to an egress. A process of establishing the LSP is actually a process of binding a forwarding equivalence class (forwarding equivalence class, FEC) to an MPLS label, and notifying the binding relationship to an adj acent LSR to establish a label forwarding table on the LSR. On a forwarding path of a packet, a sender router of the packet is an upstream LSR of an LSP, and a receiver router of the packet is a downstream LSR. As an example, as shown in FIG. 6, the PE 630 is an upstream LSR of the P650, the P650 is an upstream LSR of the P660, the P660 is an upstream LSR of the PE 640, and the PE 640 is an upstream LSR of the CE 620. After allocating a specific label to a specific FEC (namely, label binding), the downstream LSR notifies the upstream LSR of the label. The upstream LSR stores a binding relationship between the label and the FEC. For example, a label allocated by the CE 620 to the PE 640 is a label A, a label allocated by the PE 640 to the P660 is a label 3, a label allocated by the P660 to the P650 is a label 2, and a label allocated by the P650 to the PE 630 is a label 1. A packet is transferred from the ingress to the egress along the LSP in the IPv6 MPLS domain. After receiving a packet of an FEC, the upstream LSR adds, to the packet, a label allocated by the downstream LSR to the FEC, and forwards the packet to the downstream LSR. With reference to FIG. 7, the following describes in detail a specific process of forwarding a packet in the IPv6 MPLS domain.

It should be noted that the allocated MPLS labels (for example, the label A, the label 1, the label 2, and the label 3) may be short labels, or may be long labels. This is not limited in embodiments of this application. For a specific format of the MPLS label, refer to the foregoing descriptions in FIG. 3 to FIG. 5. Details are not described herein again.

FIG. 7 is a schematic flowchart of another packet processing method according to an embodiment of this application. As shown in FIG. 7, the method may include steps 710 to 760. The following separately describes steps 710 to 760 in detail.

Step 710: The PE 630 receives a data packet 1 sent by the CE 610.

As an example, the PE 630 may receive, through a private network interface of the VPN 1, the data packet 1 sent by the CE 610. The data packet 1 is: a source address (source address, SA) field + a destination address (destination address, DA) field + data (data). The SA field is an address (for example, 10.1.1.1 1-1-1) of the CE 610, and the DA field is an address (for example, 10.1.1.2 2-2-2) of the CE 620.

It should be understood that the PE 630 may correspond to the foregoing first network device.

Step 720: The PE 630 performs IPv6 encapsulation on the data packet 1, to obtain a packet 1.

After receiving the data packet 1 sent by the CE 610, the PE 630 may search a corresponding private network routing table based on a destination address of the data packet 1, and determine a next hop of a corresponding destination address route or tunnel information corresponding to the next hop of the corresponding destination address route. In addition, the PE 630 performs IPv6 encapsulation on the data packet 1 based on the determined next hop or the tunnel information corresponding to the next hop, to obtain the packet 1.

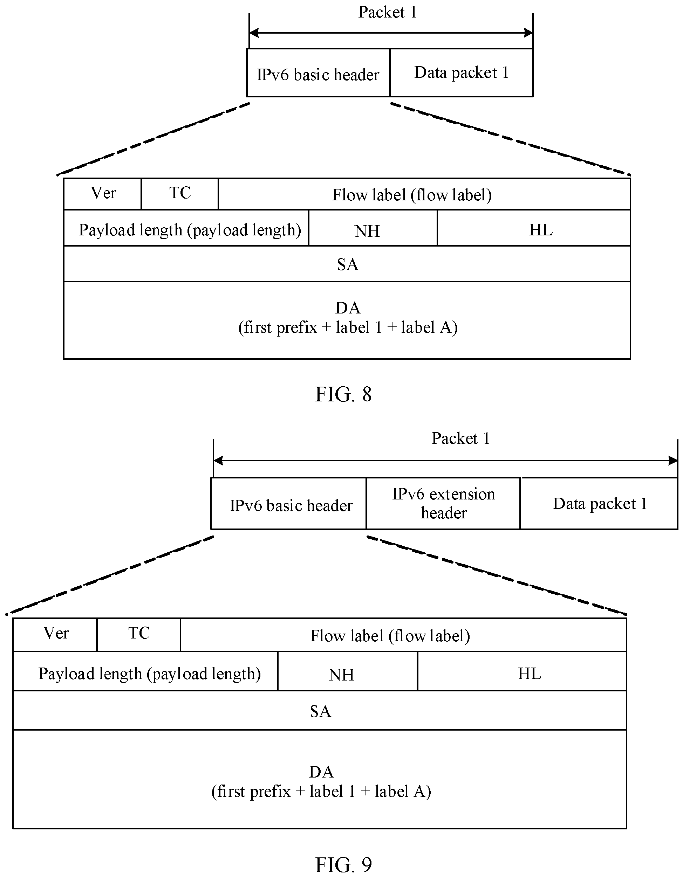

In a possible implementation, the packet 1 encapsulated by the PE 630 includes an IPv6 basic header and the data packet 1. As shown in FIG. 8, the IPv6 basic header may include the following fields.

Version (version, Ver): 4 bits long.

Traffic class (traffic class, TC): 8 bits long. This field indicates a class and priority of an IPv6 data packet.

Flow label (flow label): 20 bits long. A "flow" may be understood as a data packet from a specific source address to a specific destination address on a network. Data packets belonging to a same "flow" have a same flow label.

Payload length (payload length): 16 bits long. This field indicates a length of parts other than the IPv6 basic header, for example, a length of an IPv6 extension header and an inner user data packet.

Next header (next header, NH): 8 bits long. This field may be understood as an identifier of an IPv6 extension header (namely, a type of the IPv6 extension header) that immediately follows the IPv6 basic header, where each IPv6 extension header also includes an NH field.

Hop limit (hop limit, HL): 8 bits long. This field is similar to a time to live (time to live, TTL) field in an IPv4.

Source address (source address, SA): 128 bits long. This field is used to fill an address of user equipment that sends an IPv6 packet.

Destination address (destination address, DA): 128 bits long. This field is used to fill an address of user equipment that receives the IPv6 packet.

For example, in this embodiment of this application, the SA field in the IPv6 basic header is an address (for example, 10::1) of the PE 630. Because the destination address of the data packet 1 is the address (for example, 10.1.1.1 1-1-1) of the CE 610, the PE 630 finds, based on a private network routing table of virtual routing forwarding (virtual routing forwarding, VRF) 1, that a next hop on which going to a private network 10.1.1.2 (the address of the CE 620) depends corresponds to a tunnel in the IPv6 MPLS domain. Therefore, as shown in FIG. 8, the first network device may encapsulate a 128-bit SID into the DA in the IPv6 basic header. The SID may include: a first prefix (which may also be referred to as a special prefix), a label corresponding to the tunnel (for example, a specific label allocated by the P650 to the PE 630 is the label 1), and a private network inner label (for example, a specific label allocated by the CE 620 to the PE 640 is the label A).

The labels encapsulated in the SID may be sequentially referred to as an outermost label, an inner label, and the like from left to right. For example, the label 1 in the SID may also be referred to as the outermost label, and the label A may also be referred to as the inner label.

It should be noted that, because the label A is a bottom-layer label, a bottom of stack label tag needs to be set for the label A.

Optionally, in some embodiments, for a scenario in which there are more than three layers of labels (for example, when a special prefix is of 32 bits, and each label is of 32 bits, three layers of labels may be encapsulated in a SID 1), that is, for a scenario in which labels that need to be encapsulated by the first network device cannot find sufficient places in the DA field, an embodiment of a packet encapsulation manner is provided. A format of the packet 1 encapsulated by the first network device is shown in FIG. 9. The packet 1 includes: an IPv6 basic header, an IPv6 extension header, and the packet 1. The IPv6 extension header may include a plurality of labels. After a label filled into a DA in the IPv6 basic header is shifted to 0, a corresponding label in the IPv6 extension header is placed in the DA of the IPv6 basic header. The IPv6 extension header may be an SRH, or may be another extension header. This is not limited in this application.

There are a plurality of formats of the IPv6 extension header that includes a plurality of labels. This is not specifically limited in embodiments of this application. In a possible implementation, the IPv6 extension header includes one or more SIDs, and each SID includes a first prefix and three layers of labels (for example, each label is of 32 bits). The first network device may fill a SID into the DA field in the IPv6 basic header according to an indication. For example, the IPv6 extension header is an SRH. The first network device may determine a corresponding SID based on a segment left (segment left, SL) pointer, and fill the SID as a whole into the DA. In another possible implementation, the IPv6 extension header includes one or more SIDs, and each SID includes four layers of labels (for example, each label is of 32 bits). The first network device may obtain three layers of labels in the SID, and fill the three layers of labels after the first prefix of the DA. For example, the IPv6 extension header is an SRH. The first network device may determine three layers of labels in a SID based on the SL pointer and a label left (label left, LL) pointer, and fill the three layers of labels after the first prefix of the DA. It should be understood that the LL pointer may also be referred to as a top-layer pointer, and the SL pointer may also be referred to as a tail pointer.

For ease of description, an example in which the packet 1 generated by the PE 630 is in a format shown in FIG. 8 is used below for description.

Step 730: The PE 630 sends the packet 1 to the P650.

The PE 630 sends the packet 1 to the P650 based on the DA field in the IPv6 basic header of the packet 1. Specifically, the PE 630 may perform a corresponding operation based on the outermost label after the first prefix in the DA field (located in the IPv6 basic header) and a label forwarding entry corresponding to the outermost label. For example, the outermost label after the first prefix is the label 1, and the P650 may send the packet 1 to the P650 through an interface whose outbound interface is the P650 and that is indicated in a label forwarding entry corresponding to the label 1.

Step 740: The P650 processes the packet 1 to obtain a packet 2, and sends the packet 2 to the P660.

After the P650 receives the packet 1 sent by the PE 630, because a SID 1 (first prefix + label 1 + label A) is encapsulated in the DA in the IPv6 basic header of the packet 1, the P650 may parse out an outermost label after the first prefix according to an indication of the first prefix in the SID 1, and perform a corresponding label operation based on a label forwarding entry corresponding to the outermost label.

It should be understood that a type of the label operation may include but is not limited to: label pushing (push), label swapping (swapping, SWAP), label popping (pop), or the like. Herein, "push" may be understood as adding a label to a top of a label stack; "SWAP" may be understood as replacing, based on a label forwarding entry, a top of stack label in a packet with a label allocated by a next hop; and "pop" may be understood as removing a label in a packet.

For example, the P650 parses out that the outermost label after the first prefix of the packet 1 is the label 1. In this case, the P650 may process the packet 1 based on the label forwarding entry corresponding to the label 1, to generate the packet 2; and may send the packet 2 based on the label forwarding entry.

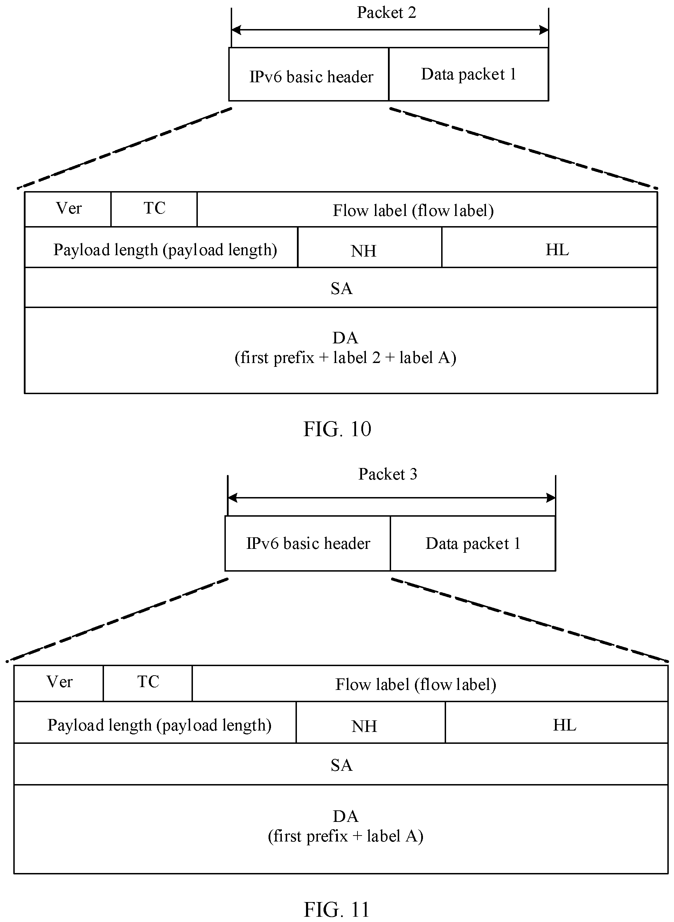

In an example, it is assumed that a label forwarding entry 1 corresponding to the label 1 is as follows: The label operation is "SWAP"; a switched label is a label (for example, the label 2) allocated by the P660 to the label 1; and the outbound interface is an interface connected to the P660. The P650 replaces the label 1 in the DA of the packet 1 with the label 2 based on the label forwarding entry 1, to generate the packet 2; and sends the packet 2 to the P660. In other words, as shown in FIG. 10, the packet 2 sent by the P650 to the P660 includes an IPv6 basic header and a data packet 1. A SA field in the IPv6 basic header is an address (for example, 10::1) of the PE 630, and a DA in the IPv6 basic header is encapsulated with a SID 2. The SID 2 may include: a first prefix (which may also be referred to as a special prefix), a label 2, and a private network inner label (label A).

In another example, it is assumed that a label forwarding entry 1 corresponding to the label 1 is as follows: The label operation is "push"; a pushed label is a label (for example, the label 2) allocated by the P660 to the label 1; and the outbound interface is an interface connected to the P660. In a possible implementation, the P650 may further encapsulate a new IPv6 basic header before the packet 1, to generate the packet 2. The new IPv6 basic header in the packet 2 includes a DA field, and the DA field is filled with a label 2. In another possible implementation, the P650 may move a label (for example, the label 1) after the first prefix in the packet 1 backward, and place a to-be-newly-pushed label (for example, the label 2) after the first prefix, to generate the packet 2. The P650 sends the packet 2 to the P660 through the outbound interface in the label forwarding entry 1.

Optionally, the packet 2 may further include an IPv6 extension header. The IPv6 extension header includes a plurality of SIDs, and each SID may include a plurality of labels (for example, each label is of 32 bits, and one SID may include four labels). If to-be-moved-backward labels in a DA of the packet 2 cannot find sufficient places in the DA, an extra label may find a place in the IPv6 extension header. There are a plurality of specific implementations. This is not limited in embodiments of this application. For example, the extra label may be placed in a SID in the IPv6 extension header, and a plurality of labels in the SID are moved backward in a unified manner. For another example, a new SID may alternatively be used in the IPv6 extension header. The new SID is only used for storing the foregoing extra label, and all labels in other SIDs remain unchanged. Optionally, the new SID may be located at a top of a stack of each of a plurality of SIDs in the IPv6 extension header.

Step 750: The P660 processes the packet 2 to obtain a packet 3, and sends the packet 3 to the PE 640.

After the P660 receives the packet 2 sent by the P650, because a SID 2 (first prefix + label 2 + label A) is encapsulated in the DA in the IPv6 basic header of the packet 2, the P660 may parse out an outermost label after the first prefix according to an indication of the first prefix in the SID 2, and perform a corresponding operation based on a label forwarding entry corresponding to the outermost label.

For example, the P660 parses out that the outermost label after the first prefix of the packet 2 is the label 2. In this case, the P660 may process the packet 2 based on the label forwarding entry corresponding to the label 2, to generate the packet 3; and may send the packet 3 based on the label forwarding entry.

In an example, it is assumed that a label forwarding entry 2 corresponding to the label 2 is as follows: The label operation is "pop"; and the outbound interface is an interface connected to the PE 640. The P660 pops up the label 2 in the DA of the packet 2 based on the label forwarding entry 2, to generate the packet 3; and sends the packet 3 to the PE 640. In other words, as shown in FIG. 11, the packet 3 sent by the P660 to the PE 640 includes an IPv6 basic header and a data packet 1. A SA field in the IPv6 basic header is an address (for example, 10::1) of the PE 630, and a DA in the IPv6 basic header is encapsulated with a SID 3. The SID 3 may include: a first prefix (which may also be referred to as a special prefix), and a private network inner label (label A).

It should be understood that, if the P660 supports a penultimate hop popping (penultimate hop popping, PHP) feature, and a label allocated by the egress device PE 640 to the P660 is the label 3, the P660 pops up, based on the label 3 allocated by the PE 640 to the P660, the label corresponding to the tunnel at a penultimate hop (for example, pops up the outermost label, namely, the label 2, that is after the first prefix). Therefore, the SID 3 encapsulated in the DA includes the first prefix and the private network inner label (label A). In this case, the label A may also be referred to as an outermost label.

Step 760: The PE 640 receives the packet 3, processes the packet 3, and sends a processed packet 3 to the CE 620.

After the PE 640 receives the packet 3 sent by the P660, it is assumed that a SID 3 (first prefix + label A) is encapsulated in the DA in the IPv6 basic header of the packet 3. In this case, the PE 640 may parse out an outermost label after the first prefix according to an indication of the first prefix in the SID 3, and perform a corresponding operation based on a label forwarding entry corresponding to the outermost label.

For example, the PE 640 parses out that the outermost label after the first prefix of the packet 3 is the label A. In this case, the PE 640 may process the packet 3 based on a label forwarding entry corresponding to the label A. For example, it is assumed that a label forwarding entry 3 corresponding to the label A is as follows: The label operation is "pop and search", that is, the label is popped up. The PE 640 decapsulates the packet 3 according to an indication of the label, and removes the IPv6 encapsulation, to obtain a data packet 1 at an inner layer. As described above, the data packet 1 includes: a source address (source address, SA) field + a destination address (destination address, DA) field + data (data). The PE 640 may search, based on that a destination address of the data packet 1 is the address (for example, 10.1.1.2 2-2-2) of the CE 620, and based on a packet type (for example, an L3 packet) indicated by a next header (next header, NH) field in the IPv6 basic header, a corresponding L3 private network routing table for an outbound interface, and send the data packet 1 to the CE 620 through the outbound interface.

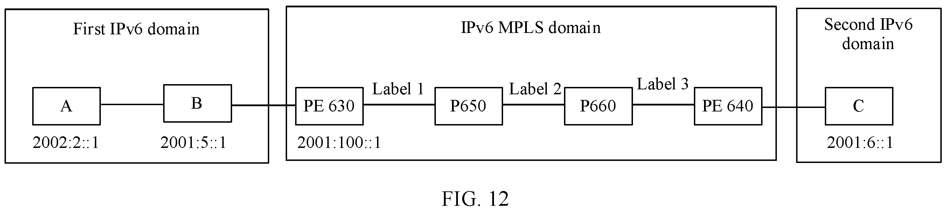

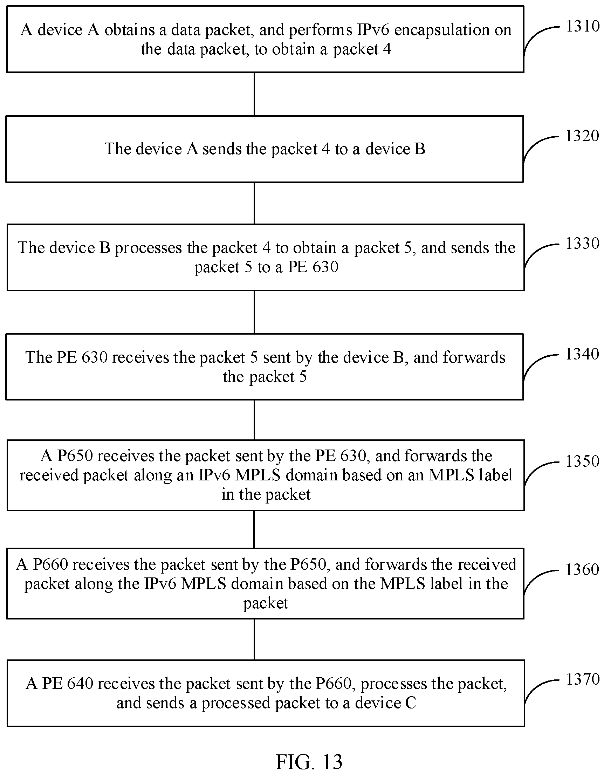

The following uses a scenario shown in FIG. 12 as an example to describe, with reference to FIG. 13, a specific implementation of the packet processing method provided in embodiments of this application. It should be understood that examples in FIG. 12 and FIG. 13 are merely intended to help a person skilled in the art understand embodiments of this application, but are not intended to limit embodiments of this application to specific values or specific scenarios in FIG. 12 and FIG. 13. It is clear that a person skilled in the art can make various equivalent modifications or changes based on the provided examples, and such modifications and changes also fall within the scope of embodiments of this application.

FIG. 12 is a diagram of another cross-domain scenario applied to an embodiment of this application. As shown in FIG. 12, the scenario may include one or more IPv6 domains (for example, a first IPv6 domain and a second IPv6 domain) and an IPv6 MPLS domain. IPv6 forwarding is performed between the domains in a segment routing (segment routing, SR) manner.

It should be understood that SR based on an IPv6 forwarding plane may alternatively be briefly referred to as SRv6. To implement an SR technology based on the IPv6 forwarding plane, a segment routing extension header (segment routing header, SRH) is added to an IPv6 routing extension header. The SRH extension header specifies an IPv6 explicit path and stores IPv6 segment list (segment list) information. A segment list is a forwarding path obtained by sequentially arranging segments and network nodes. During packet forwarding, an SL field and a segment list field jointly determine IPv6 destination address (IPv6 DA) information, to guide a forwarding path and a forwarding behavior of a packet.

As shown in FIG. 12, in the first IPv6 domain including a device A and a device B, packet forwarding may be performed in an IPv6 manner, where the device A is an ingress (ingress) device of the first IPv6 domain, and the device B is an egress (egress) device of the first IPv6 domain. In the second IPv6 domain including a device C, packet forwarding may be performed in the IPv6 manner, where the device C is an ingress (ingress) device of the second IPv6 domain. In the IPv6 MPLS domain including a PE 630, a PE 640, a P650, and a P660, IPv6 forwarding may be implemented based on a label forwarding path determined by using an MPLS label, where the PE 630 is an ingress (ingress) device of the IPv6 MPLS domain, and the PE 640 is an egress (egress) device of the IPv6 MPLS domain. It should be understood that devices (the PE 630, the PE 640, the P650, and the P660) included in the IPv6 MPLS domain shown in FIG. 12 are the same as the devices in FIG. 6. For specific descriptions of the devices in the IPv6 MPLS domain, refer to the descriptions in FIG. 6. Details are not described herein again.

It should be noted that, for a cross-domain scenario, boundary devices of two domains may be one device, or may be two devices. This is not specifically limited in embodiments of this application. For example, in FIG. 12, the boundary device B and the boundary device PE 630 may be one device, or may be two different devices. For ease of description, an example in which the boundary device B and the boundary device PE 630 are different devices is used for description in FIG. 12.

FIG. 13 is a schematic flowchart of another packet processing method according to an embodiment of this application. As shown in FIG. 13, the method may include steps 1310 to 1370. The following separately describes steps 1310 to 1370 in detail.

Step 1310: A device A obtains a data packet, and performs IPv6 encapsulation on the data packet, to obtain a packet 4.

For the SRv6, after obtaining the data packet, the device A may perform IPv6 encapsulation on the data packet, to obtain an IPv6 packet. The IPv6 packet includes: an IPv6 basic header, an IPv6 extension header, and the data packet. The IPv6 extension header may be, for example, an SRH. The SRH includes a plurality of pieces of segment list information, and the plurality of pieces of segment list information indicates a specific forwarding path.

The following describes in detail fields included in the IPv6 extension header. It should be understood that, for descriptions of fields in the IPv6 basic header, refer to the descriptions in step 720. Details are not described herein again.

The IPv6 extension header may include the following fields.

Next header (next header, NH): 8 bits long. This field indicates a type of a packet header closely following the IPv6 extension header.

Header extension length (header extension length, Hdr Ext Len): 8 bits long. This field identifies a length of the IPv6 extension header, and mainly refers to a length occupied from a segment list [0] to a segment list [n].

Routing type (routing type): 8 bits long. This field identifies a type of a routing header, where an SRH type is 4.

Segment left (segment left, SL): 8 bits long. This field indicates a quantity of intermediate nodes that still need to be accessed before a destination node is reached.

Last entry (last entry): 8 bits long. This field indicates that a segment list includes an index of a last element of the segment list.

Flags (flags): 8 bits long. This field indicates some identifiers of a data packet.

Tag (tag): 16 bits long. This field identifies data packets in a same group.

Segment list (segment list [n]): 128*n bits long. The segment list is encoded from a last segment of a path. The segment list is in a form of an IPv6 address.

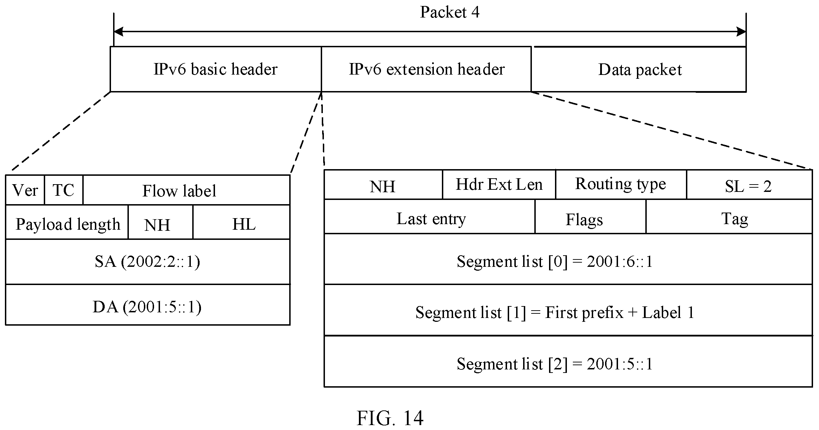

In a possible implementation, a format of the packet 4 obtained by the device A through encapsulation is shown in FIG. 14. The packet 4 includes an IPv6 basic header, an IPv6 extension header, and a data packet. A value of an SL in the IPv6 extension header is 2, and segment list information includes: a segment list [0] to a segment list [2]. The segment list [0] indicates an address of an ingress device in a first IPv6 domain, for example, an address 2001:6::1 of a device C. A segment list [1] indicates a forwarding path that is determined based on an MPLS label and that is in an IPv6 MPLS domain, for example, first prefix + label 1. The segment list [2] indicates an address of an egress device in a second IPv6 domain, for example, an address 2001:5::1 of a device B. A SA field in the IPv6 basic header is an address (for example, 2002:2::1) of the device A, and a destination address DA is an address indicated by the segment list [2], for example, an address 2001:5::1 of the device B.

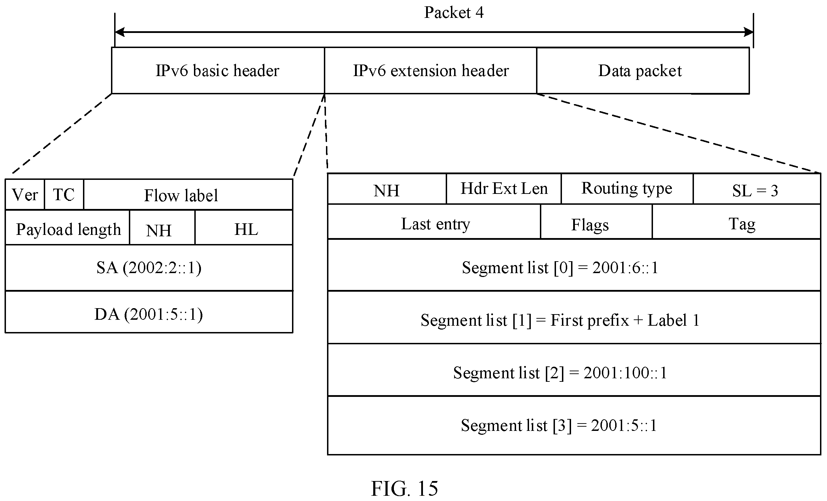

In another possible implementation, another format of the packet 4 obtained by the device A through encapsulation is shown in FIG. 15. The packet 4 includes an IPv6 basic header, an IPv6 extension header, and a data packet. A value of an SL in the IPv6 extension header is 2, and segment list information includes: a segment list [0] to a segment list [3]. The segment list [0] indicates an address of an ingress device in a first IPv6 domain, for example, an address 2001:6::1 of a device C. A segment list [1] indicates a forwarding path that is determined based on an MPLS label and that is in an IPv6 MPLS domain, for example, first prefix + label 1. A segment list [2] indicates an address of an ingress device in the IPv6 MPLS domain, for example, an address 2001:100::1 of a PE 630. The segment list [3] indicates an address of an egress device in a second IPv6 domain, for example, an address 2001:5::1 of a device B. A SA field in the IPv6 basic header is an address (for example, 2002:2::1) of the device A, and a destination address DA is an address indicated by the segment list [2], for example, an address 2001:5::1 of the device B.

Step 1320: The device A sends the packet 4 to the device B.

After obtaining the packet 4 through encapsulation, the device A may send the packet 4 to the device B based on that a destination address DA field in the IPv6 basic header is the address 2001:5::1 of the device B.

Step 1330: The device B processes the packet 4 to obtain a packet 5, and sends the packet 5 to the PE 630.

After receiving the packet 4 sent by the device A, the device B may process the packet 4 based on that the destination address DA field in the IPv6 basic header is the address 2001:5::1 of the device B, to obtain a packet 5; and send the packet 5 to the ingress device PE 630 in the IPv6 MPLS domain.

In an example, the device B may encapsulate tunnel information (in embodiments of this application, the tunnel information is a SID, and the SID may be, for example, first prefix + label 1) of a tunnel in which the PE 630 is located into the destination address DA field in the IPv6 basic header, to generate the packet 5. In addition, the device B sends the packet 5 to the ingress device PE 630 in the IPv6 MPLS domain based on the DA field, so that after receiving the packet 5, the PE 630 directly forwards the packet 5 along the tunnel based on the tunnel information and a corresponding forwarding entry.

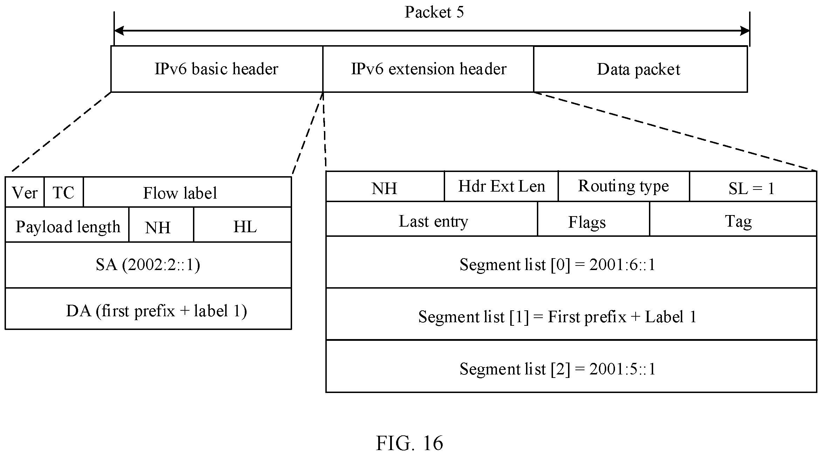

For example, a format of the packet 4 received by the device B is shown in FIG. 14. The device B uses a corresponding segment list as the destination address DA field in the IPv6 basic header according to an indication of an SL field. For example, a value of the SL field in the packet 4 shown in FIG. 14 is 2. The device B uses segment list [1] = first prefix + label 1 as the destination address DA field in the IPv6 basic header according to SL - 1 = 1, and updates the value of the SL field to 1, to generate the packet 5. A format of the packet 5 is shown in FIG. 16. The packet 5 includes: an IPv6 basic header, an IPv6 extension header, and a data packet. A value of an SL in the IPv6 extension header is 1, and segment list information includes: a segment list [0] to a segment list [2]. A SA field in the IPv6 basic header is an address (for example, 2002:2::1) of the device A, and a destination address DA is an address indicated by a segment list [1], for example, first prefix + label 1.

In another example, the device B may encapsulate a device address of the PE 630 into the destination address DA field in the IPv6 basic header, to generate the packet 5. In addition, the device B sends the packet 5 to the ingress device PE 630 in the IPv6 MPLS domain based on the DA field. In this embodiment, after receiving the packet 5, the PE 630 may encapsulate the tunnel information into the destination address DA field in the IPv6 basic header, and forward the packet 5 along the tunnel based on the tunnel information and a corresponding forwarding entry.

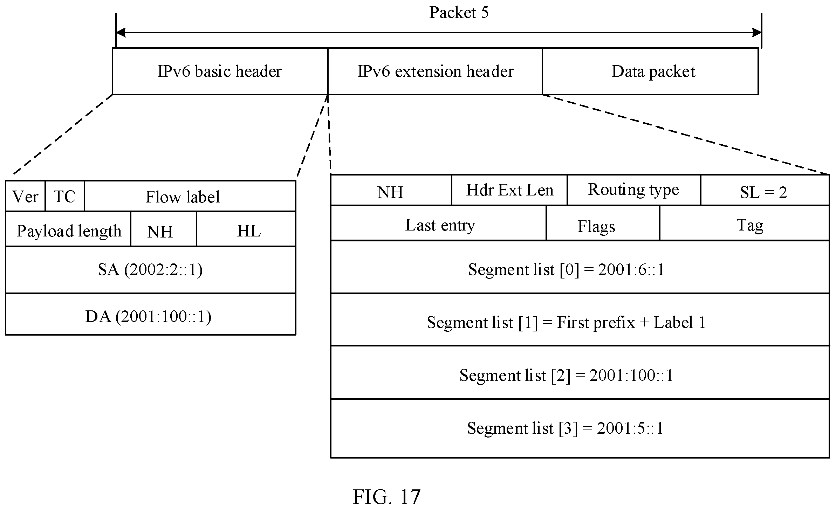

For example, a format of the packet 4 received by the device B is shown in FIG. 15. The device B uses a corresponding segment list as the destination address DA field in the IPv6 basic header according to an indication of an SL field. For example, a value of the SL field in the packet 4 shown in FIG. 15 is 3. The device B uses segment list [2] = 2001:100::1 as the destination address DA field in the IPv6 basic header according to SL - 1 = 2, and updates the value of the SL field to 2, to generate the packet 5. A format of the packet 5 is shown in FIG. 17. The packet 5 includes: an IPv6 basic header, an IPv6 extension header, and a data packet. A value of an SL in the IPv6 extension header is 2, and segment list information includes: a segment list [0] to a segment list [3]. A SA field in the IPv6 basic header is an address (for example, 2001:6::1) of the device A, and a destination address DAis an address indicated by the segment list [2], for example, an address 2001:100::1 of the device B.

Step 1340: The PE 630 receives the packet 5 sent by the device B, and forwards the packet 5.

In a possible implementation, the destination address DA field (which is located in the IPv6 basic header) of the packet 5 received by the PE 630 is encapsulated with tunnel information (in this embodiment of this application, the tunnel information is a SID, and the SID may be, for example, first prefix + label 1). In this case, the PE 630 may directly forward the packet 5 along the tunnel based on the tunnel information and a corresponding forwarding entry. For example, a format of the packet 5 received by the PE 630 is shown in FIG. 16. A DA field of the packet 5 is first prefix + label 1. The PE 630 may perform a corresponding forwarding operation based on an outermost label after the first prefix in the DA field and a label forwarding entry corresponding to the outermost label. For example, the outermost label after the first prefix is the label 1, and the P650 may send the packet 5 to the P650 through an interface whose outbound interface is the P650 and that is indicated in a label forwarding entry corresponding to the label 1. It should be noted that, in this implementation, the PE 630 and the device B may alternatively be one device.

In another possible implementation, the destination address DA field (which is located in the IPv6 basic header) of the packet 5 received by the PE 630 is the device address of the PE 630. In this case, the PE 630 needs to encapsulate corresponding tunnel information (in this embodiment of this application, the tunnel information is a SID, and the SID may be, for example, first prefix + label 1) into the destination address DA field of the packet 5, to generate a packet 6; and sends the packet 6 to the P650.

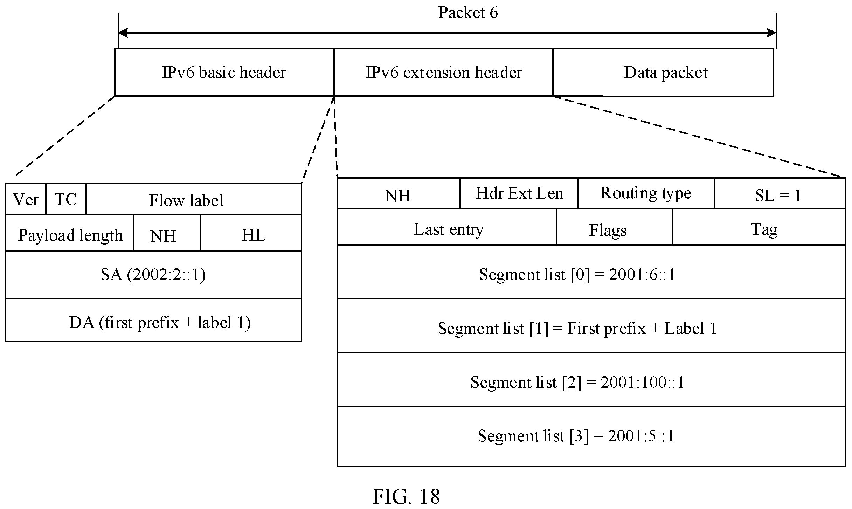

For example, a format of the packet 5 received by the PE 630 is shown in FIG. 17. The PE 630 uses a corresponding segment list as the destination address DA field in the IPv6 basic header according to an indication of an SL field. For example, a value of the SL field in the packet 5 shown in FIG. 17 is 2. The PE 630 uses segment list [1] = first prefix + label 1 as the destination address DA field in the IPv6 basic header according to SL - 1 = 1, and updates the value of the SL field to 1, to generate the packet 6. A format of the packet 6 is shown in FIG. 18. The packet 6 includes: an IPv6 basic header, an IPv6 extension header, and a data packet. A value of an SL in the IPv6 extension header is 1, and segment list information includes: a segment list [0] to a segment list [3]. A SA field in the IPv6 basic header is an address (for example, 2002:2:: 1) of the device A, and a destination address DA is an address indicated by a segment list [1], for example, first prefix + label 1.

Step 1350: The P650 receives the packet sent by the PE 630, and forwards the received packet along the IPv6 MPLS domain based on an MPLS label in the packet.

After the P650 receives the packet sent by the PE 630, because a SID (for example, first prefix + label 1) is encapsulated in the DA in the IPv6 basic header, the P650 may parse out an outermost label after the first prefix according to an indication of the first prefix in the SID 1, perform a corresponding label operation based on a label forwarding entry corresponding to the outermost label, and send the packet to the P660.

The packet that is sent by the PE 630 and that is received by the P650 may be the packet 5 shown in FIG. 16, or may be the packet 6 shown in FIG. 18. This is not specifically limited in embodiments of this application, provided that a SID (for example, first prefix + label 1) is encapsulated in the DA in the IPv6 basic header of the packet. For ease of description, an example in which the packet that is sent by the PE 630 and that is received by the P650 is the packet 6 shown in FIG. 18 is used below for description.

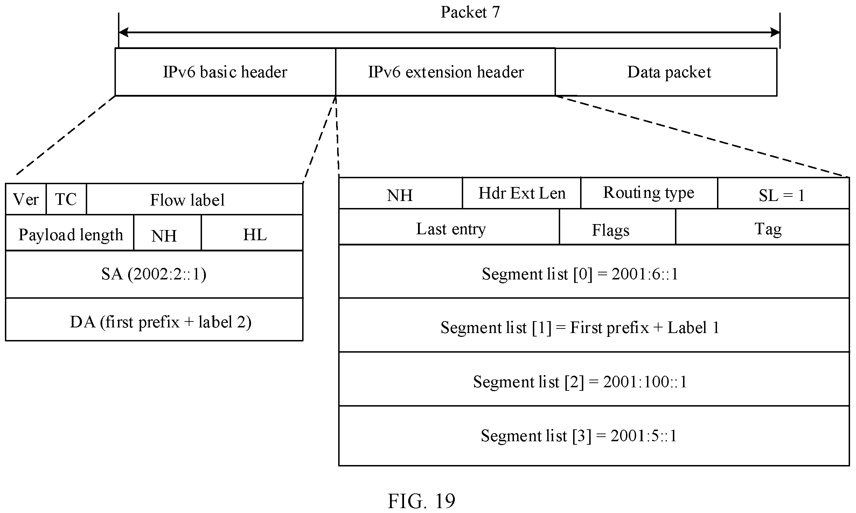

As an example, a format of a packet sent by the P650 to the P660 is shown in FIG. 19. Compared with the packet 6 shown in FIG. 18, the packet 7 shown in FIG. 19 differs from the packet 6 shown in FIG. 18 in terms of the following: P650 replaces the label 1 of the DA in the IPv6 basic header with the label 2. A specific processing process corresponds to that in step 740. For details, refer to the descriptions in step 740. Details are not described herein again.

Step 1360: The P660 receives the packet sent by the P650, and forwards the received packet along the IPv6 MPLS domain based on the MPLS label in the packet.

After receiving the packet sent by the P650, the P660 may parse out an outermost label after a first prefix according to an indication of the first prefix in the DA in the IPv6 basic header, and perform a corresponding operation based on a label forwarding entry corresponding to the outermost label.

For example, the packet that is sent by the P650 and that is received by the P660 is the packet 7 shown in FIG. 19. The DA in the IPv6 basic header of the packet 7 is a first label + a label 2. It is assumed that a label forwarding entry corresponding to the label 2 is as follows: A label operation is "pop"; and an outbound interface is an interface connected to the PE 640. The P660 pops up the label 2 in the packet 7 based on the label forwarding entry, and sends the packet 7 to the PE 640. In this case, because there is no other label after the label 2 is popped up, there are the following several different processing manners in embodiments of this application.

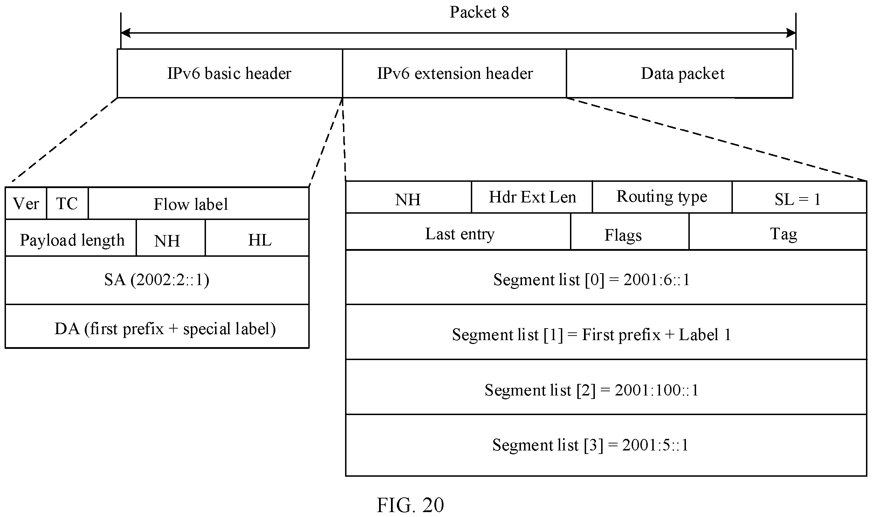

In a possible implementation, the P660 encapsulates a special label after the first label, to generate a packet 8; and sends the packet 8 to the PE 640 through the corresponding outbound interface in the label forwarding entry. Compared with the packet 7 shown in FIG. 19, the packet 8 shown in FIG. 20 differs from the packet 7 shown in FIG. 19 in terms of the following: P650 replaces the label 1 of the DA in the IPv6 basic header with the special label.

It should be noted that the special label needs to indicate that the special label is a bottom of stack label, and there is no other label. In an example, the special label is a long label, for example, a NULL (0) label, where a bottom of stack indicator of the NULL (0) label is set. In another example, the special label is a short label. Because the short label does not have a bottom of stack indicator, an invalid (invalid) label may be defined, and the invalid label indicates that there is no other label after the invalid label.

Step 1370: The PE 640 receives the packet sent by the P660, processes the packet, and sends a processed packet to the device C.

In an example, the packet that is sent by the P660 and that is received by the PE 640 is the packet 8 shown in FIG. 20. The PE 640 parses a special label based on first prefix+special label being encapsulated into the DA in the IPv6 basic header of the packet 8, and performs a corresponding operation based on a label forwarding entry corresponding to the special label. For example, the special label indicates that the special label is a bottom of stack label, and there is no other label. The PE 640 may determine a corresponding segment list according to an indication of the SL field in the IPv6 extension header, and use the segment list as the DA in the IPv6 basic header, to generate a packet 9.

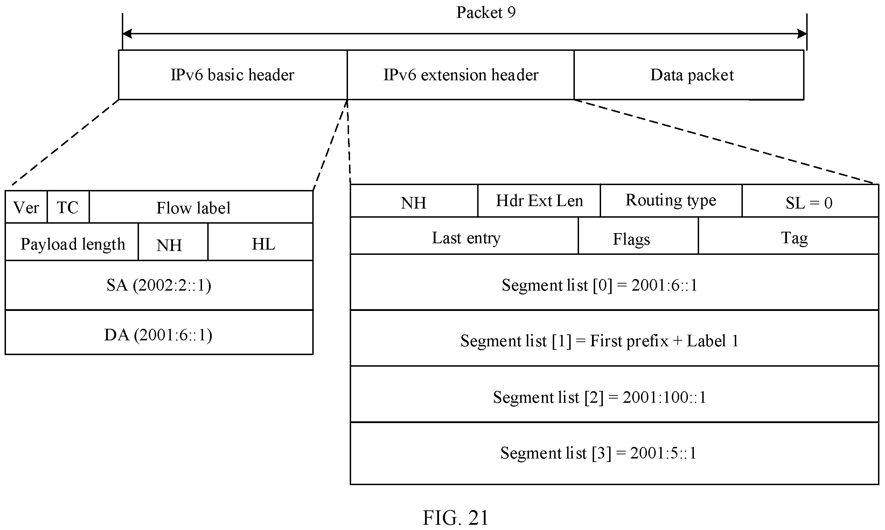

For example, as shown in FIG. 20, a value of the SL field in the packet 8 is 1. The PE 640 uses the segment list [0] = 2001:6::1 as the destination address DA field in the IPv6 basic header according to SL - 1 = 0, and updates the value of the SL field to 0, to generate the packet 9. A format of the packet 9 is shown in FIG. 21. The packet 9 includes: an IPv6 basic header, an IPv6 extension header, and a data packet. A value of an SL in the IPv6 extension header is 0, and segment list information includes: a segment list [0] to a segment list [3]. A SA field in the IPv6 basic header is an address (for example, 2001:6::1) of the device A, and a destination address DA is an address indicated by the segment list [0], for example, an address 2001:6::1 of the device C.

The PE 640 may send the generated packet 9 to the device C based on that the destination address DA field in the IPv6 basic header is the address 2001:6::1 of the device C.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

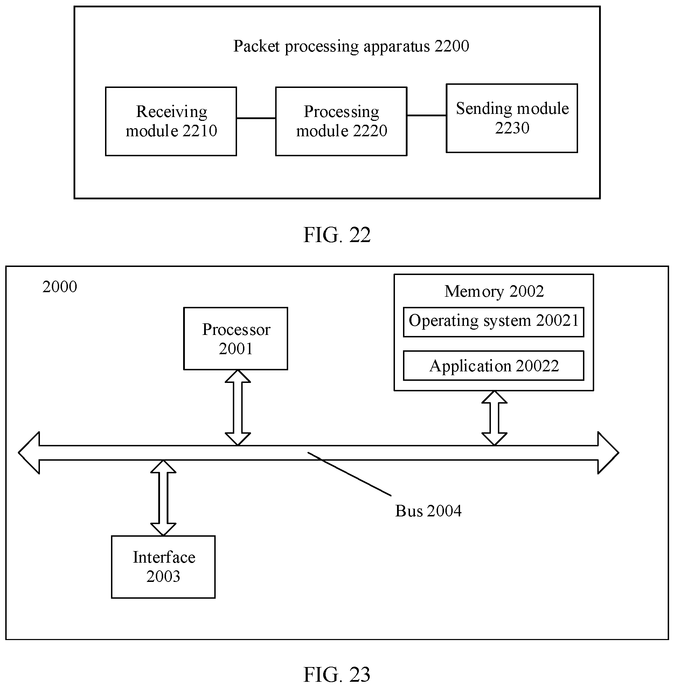

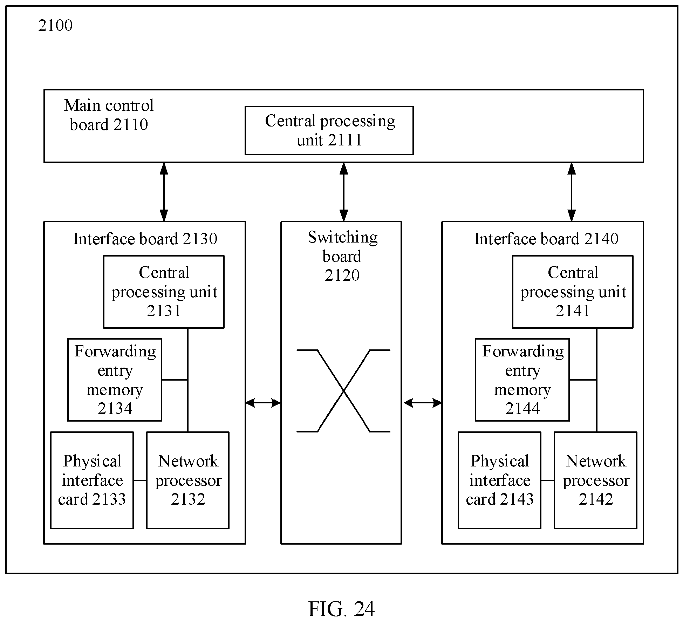

The foregoing describes in detail the packet processing method provided in embodiments of this application with reference to FIG. 1 to FIG. 21. The following describes in detail apparatus embodiments of this application with reference to FIG. 22 and FIG. 24. It should be understood that descriptions of the method embodiments correspond to descriptions of the apparatus embodiments. Therefore, for a part that is not described in detail, refer to the foregoing method embodiments.

FIG. 22 is a diagram of a structure of a packet processing apparatus 2200 according to an embodiment of this application. The apparatus 2200 is disposed in a first network device. The packet processing apparatus 2200 shown in FIG. 22 may perform a corresponding step of the packet processing method in the foregoing embodiment.

As shown in FIG. 22, the packet processing apparatus 2200 includes: a receiving module 2210, a processing module 2220, and a sending module 2230. The receiving module 2210 is configured to receive a first packet, where the first packet includes a data packet. The processing module 2220 is configured to determine a second packet based on the first packet and a first segment identifier SID, where the second packet is an internet protocol version 6 IPv6 packet, the second packet includes the data packet and the first SID, the first SID includes a first prefix and at least one multiprotocol label switching MPLS label, the first prefix indicates that the first SID carries the at least one MPLS label, and the at least one MPLS label indicates to use a label forwarding path determined by using the at least one MPLS label to implement IPv6 forwarding. The sending module 2230 is configured to forward the second packet based on the label forwarding path.

Optionally, the first packet is the data packet, and the processing module 2220 is specifically configured to perform IPv6 encapsulation on the first packet based on the first SID, to obtain the second packet.

Optionally, the second packet includes an IPv6 basic header, the IPv6 basic header includes a destination address DA field, and the DA field is used to carry the first SID.

Optionally, the second packet includes an IPv6 extension header, and the IPv6 extension header includes the first SID.

Optionally, the IPv6 extension header further includes a second SID, and the second SID includes the first prefix and at least one MPLS label, or the second SID includes at least one MPLS label.

Optionally, the first SID includes a locator (locator) and a function (function), the locator is used to carry the first prefix, and the function is used to carry the at least one MPLS label.

Optionally, the sending module 2230 is specifically configured to forward the second packet based on a first MPLS label and a corresponding MPLS forwarding entry, where the first MPLS label is a 1^{st} MPLS label encapsulated after the first prefix in the first SID.

Optionally, the MPLS forwarding entry indicates to insert a second MPLS label into the second packet. The sending module 2230 is specifically configured to: perform IPv6 encapsulation on the second packet to generate a third packet, where the third packet is an IPv6 packet, and the third packet includes the second MPLS label; and send the third packet through an outbound interface corresponding to the second MPLS label in the MPLS forwarding entry.

Optionally, the MPLS forwarding entry indicates to insert a second MPLS label into the second packet. The sending module 2230 is specifically configured to: encapsulate the second MPLS label before the first MPLS label in the second packet to generate a third packet; and send the third packet through an outbound interface corresponding to the second MPLS label in the MPLS forwarding entry.

Optionally, the at least one MPLS label is a short label.

Optionally, the packet processing apparatus 2200 is an ingress device or an intermediate forwarding device of the label forwarding path.

FIG. 23 is a diagram of a hardware structure of a first network device 2000 according to an embodiment of this application. The first network device 2000 shown in FIG. 23 may perform the packet processing method in the foregoing embodiment.

As shown in FIG. 23, the first network device 2000 includes a processor 2001, a memory 2002, an interface 2003, and a bus 2004. The interface 2003 may be implemented in a wireless or wired manner, and may be specifically a network adapter. The processor 2001, the memory 2002, and the interface 2003 are connected through the bus 2004.

The interface 2003 may specifically include a transmitter and a receiver, and is configured to enable the first network device to implement the foregoing receiving and sending.

The processor 2001 is configured to perform processing performed by the first network device in the foregoing embodiment. The memory 2002 includes an operating system 20021 and an application 20022, and is configured to store a program, code, or instructions. When a processor or a hardware device executes the program, the code, or the instructions, a processing process related to the first network device in the method embodiments may be completed. Optionally, the memory 2002 may include a read-only memory (read-only memory, ROM) and a random access memory (random access memory, RAM). The ROM includes a basic input/output system (basic input/output system, BIOS) or an embedded system, and the RAM includes an application and an operating system. When the first network device 2000 needs to be run, a BIOS built in the ROM or a boot loader in the embedded system is used to boot a system to start, to boot the first network device 2000 to enter a normal running state. After entering the normal running state, the first network device 2000 runs the application and the operating system in the RAM, to complete the processing process related to the first network device 2000 in the method embodiments.

It may be understood that FIG. 23 merely shows a simplified design of the first network device 2000. In actual application, the first network device may include any quantity of interfaces, processors, or memories.

FIG. 24 is a diagram of a hardware structure of another first network device 2100 according to an embodiment of this application. The first network device 2100 shown in FIG. 24 may perform the packet processing method in the foregoing embodiment.

As shown in FIG. 24, the first network device 2100 includes a main control board 2110, an interface board 2130, a switching board 2120, and an interface board 2140. The main control board 2110, the interface board 2130, the interface board 2140, and the switching board 2120 are connected to a system backplane through a system bus to implement interworking. The main control board 2110 is configured to complete functions such as system management, device maintenance, and protocol processing. The switching board 2120 is configured to exchange data between interface boards (where the interface board is also referred to as a line card or a service board). The interface board 2130 and the interface board 2140 are configured to: provide various service interfaces (such as a POS interface, a GE interface, and an ATM interface), and forward a data packet.

The interface board 2130 may include a central processing unit 2131, a forwarding entry memory 2134, a physical interface card 2133, and a network processor 2132. The central processing unit 2131 is configured to: control and manage the interface board, and communicate with a central processing unit on the main control board. The forwarding entry memory 2134 is configured to store an entry. The physical interface card 2133 is configured to receive and send traffic.

It should be understood that an operation on the interface board 2140 is consistent with an operation on the interface board 2130 in this embodiment of this application. For brevity, details are not described again.

It should be understood that the first network device 2100 in this embodiment may correspond to functions and/or steps implemented in the foregoing method embodiments. Details are not described herein again.

In addition, it should be noted that there may be one or more main control boards. When there are a plurality of main control boards, the main control boards may include a primary main control board and a secondary main control board. There may be one or more interface boards. A stronger data processing capability of the first network device indicates more provided interface boards. There may also be one or more physical interface cards on the interface board. There may be no switching board or one or more switching boards. When there are a plurality of switching boards, the plurality of switching boards may jointly implement load balancing and redundancy backup. In a centralized forwarding architecture, the first network device may not need a switching board, and the interface board undertakes a service data processing function of an entire system. In a distributed forwarding architecture, the first network device may have at least one switching board, to implement data exchange between a plurality of interface boards by using the switching board, and provide a large-capacity data exchange and processing capability. Therefore, a data access and processing capability of the first network device in the distributed architecture is higher than that of a device in the centralized architecture. A specific architecture that is to be used depends on a specific networking deployment scenario. This is not limited herein.

An embodiment of this application further provides a computer-readable medium. The computer-readable medium stores program code. When the computer program code is run on a computer, the computer is enabled to perform the method performed by the first network device. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

An embodiment of this application further provides a chip, applied to a first network device. The chip includes at least one processor, at least one memory, and an interface circuit. The interface circuit is responsible for information interaction between the chip and the outside. The at least one memory, the interface circuit, and the at least one processor are interconnected through a line. The at least one memory stores instructions, and the instructions are executed by the at least one processor, to perform operations of the first network device in the methods in the foregoing aspects. In a specific implementation process, the chip may be implemented in a form of a central processing unit (central processing unit, CPU), a micro controller unit (micro controller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a computer program product, applied to a first network device. The computer program product includes a series of instructions, and when the instructions are run, operations of the first network device in the methods in the foregoing aspects are performed.

An embodiment of this application further provides a system, including the foregoing first network device.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing described system, apparatus, and unit, refer to a corresponding process in the foregoing method embodiments. Details are not described herein again.

In several embodiments provided in this application, it should be understood that the disclosed system, apparatus and method may be implemented in another manner. For example, the described apparatus embodiments are merely examples. For example, division into the units is merely logical function division and may be other division during actual implementation. For example, a plurality of units or components may be combined or may be integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part that contributes to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet processing method, comprising:
receiving, by a first network device, a first packet, wherein the first packet comprises a data packet;
determining, by the first network device, a second packet based on the first packet and a first segment identifier SID, wherein the second packet is an internet protocol version 6 IPv6 packet, the second packet comprises the data packet and the first SID, the first SID comprises a first prefix and at least one multiprotocol label switching MPLS label, the first prefix indicates that the first SID carries the at least one MPLS label, and the at least one MPLS label indicates to use a label forwarding path determined by using the at least one MPLS label to implement IPv6 forwarding; and
forwarding, by the first network device, the second packet based on the label forwarding path.

2. The method according to claim 1, wherein the first packet is the data packet; and
the determining, by the first network device, a second packet based on the first packet and a first segment identifier SID comprises:
performing, by the first network device, IPv6 encapsulation on the first packet based on the first SID, to obtain the second packet.

3. The method according to claim 1 or 2, wherein the second packet comprises an IPv6 basic header, the IPv6 basic header comprises a destination address DA field, and the DA field is used to carry the first SID.

4. The method according to any one of claims 1 to 3, wherein the second packet comprises an IPv6 extension header, and the IPv6 extension header comprises the first SID.

5. The method according to claim 4, wherein the IPv6 extension header further comprises a second SID; and
the second SID comprises the first prefix and at least one MPLS label; or
the second SID comprises at least one MPLS label.

6. The method according to any one of claims 1 to 5, wherein the first SID comprises a locator (locator) and a function (function), the locator is used to carry the first prefix, and the function is used to carry the at least one MPLS label.

7. The method according to any one of claims 1 to 6, wherein the forwarding, by the first network device, the second packet based on the label forwarding path comprises:
forwarding, by the first network device, the second packet based on a first MPLS label and a corresponding MPLS forwarding entry, wherein the first MPLS label is a 1^{st} MPLS label encapsulated after the first prefix in the first SID.

8. The method according to claim 7, wherein the MPLS forwarding entry indicates to insert a second MPLS label into the second packet; and
the forwarding, by the first network device, the second packet based on a first MPLS label and a corresponding MPLS forwarding entry comprises:
performing, by the first network device, IPv6 encapsulation on the second packet to generate a third packet, wherein the third packet is an IPv6 packet, and the third packet comprises the second MPLS label; and
sending, by the first network device, the third packet through an outbound interface corresponding to the second MPLS label in the MPLS forwarding entry.

9. The method according to claim 7, wherein the MPLS forwarding entry indicates to insert a second MPLS label into the second packet; and
the forwarding, by the first network device, the second packet based on a first MPLS label and a corresponding MPLS forwarding entry comprises:
encapsulating, by the first network device, the second MPLS label before the first MPLS label in the second packet, to generate a third packet; and
sending, by the first network device, the third packet through an outbound interface corresponding to the second MPLS label in the MPLS forwarding entry.

10. The method according to any one of claims 1 to 9, wherein the at least one MPLS label is a short label.

11. The method according to any one of claims 1 to 10, wherein the first network device is an ingress device or an intermediate forwarding device of the label forwarding path.

12. A packet processing apparatus, wherein the apparatus is disposed in a first network device, and the apparatus comprises:
a receiving module, configured to receive a first packet, wherein the first packet comprises a data packet;
a processing module, configured to determine a second packet based on the first packet and a first segment identifier SID, wherein the second packet is an internet protocol version 6 IPv6 packet, the second packet comprises the data packet and the first SID, the first SID comprises a first prefix and at least one multiprotocol label switching MPLS label, the first prefix indicates that the first SID carries the at least one MPLS label, and the at least one MPLS label indicates to use a label forwarding path determined by using the at least one MPLS label to implement IPv6 forwarding; and
a sending module, configured to forward the second packet based on the label forwarding path.

13. The apparatus according to claim 12, wherein the first packet is the data packet; and
the processing module is specifically configured to perform IPv6 encapsulation on the first packet based on the first SID, to obtain the second packet.

14. The apparatus according to claim 12 or 13, wherein the second packet comprises an IPv6 basic header, the IPv6 basic header comprises a destination address DA field, and the DA field is used to carry the first SID.

15. The apparatus according to any one of claims 12 to 14, wherein the second packet comprises an IPv6 extension header, and the IPv6 extension header comprises the first SID.

16. The apparatus according to claim 15, wherein the IPv6 extension header further comprises a second SID; and
the second SID comprises the first prefix and at least one MPLS label; or
the second SID comprises at least one MPLS label.

17. The apparatus according to any one of claims 12 to 16, wherein the first SID comprises a locator (locator) and a function (function), the locator is used to carry the first prefix, and the function is used to carry the at least one MPLS label.

18. The apparatus according to any one of claims 12 to 17, wherein the sending module is specifically configured to:
forward the second packet based on a first MPLS label and a corresponding MPLS forwarding entry, wherein the first MPLS label is a 1^{st} MPLS label encapsulated after the first prefix in the first SID.

19. The apparatus according to claim 18, wherein the MPLS forwarding entry indicates to insert a second MPLS label into the second packet; and
the sending module is specifically configured to:
perform IPv6 encapsulation on the second packet to generate a third packet, wherein the third packet is an IPv6 packet, and the third packet comprises the second MPLS label; and
send the third packet through an outbound interface corresponding to the second MPLS label in the MPLS forwarding entry.

20. The apparatus according to claim 18, wherein the MPLS forwarding entry indicates to insert a second MPLS label into the second packet; and
the sending module is specifically configured to:
encapsulate the second MPLS label before the first MPLS label in the second packet, to generate a third packet; and
send the third packet through an outbound interface corresponding to the second MPLS label in the MPLS forwarding entry.

21. The apparatus according to any one of claims 12 to 20, wherein the at least one MPLS label is a short label.

22. The apparatus according to any one of claims 12 to 21, wherein the apparatus is an ingress device or an intermediate forwarding device of the label forwarding path.

23. A first network device, comprising a processor and a memory, wherein the memory is configured to store a program or code, and the processor is configured to invoke the program from the memory and run the program to perform the method according to any one of claims 1 to 11.

24. A packet processing system, comprising the apparatus according to any one of claims 12 to 22.
